(19) Europäisches Patentamt
European Patent Office
Office européen des brevets

(11) Veröffentlichungsnummer: **0 012 381**
**B1**

(12) # EUROPÄISCHE PATENTSCHRIFT

(45) Veröffentlichungstag der Patentschrift: **15.12.82**

(21) Anmeldenummer: **79104977.8**

(22) Anmeldetag: **06.12.79**

(51) Int. Cl.³: **C 08 G 18/38,**
C 08 G 73/06, C 09 D 3/48,
H 01 B 3/30,
C 07 D 233/72,
C 09 J 3/16, C 07 D 233/86

(54) **Verfahren zur Herstellung von Hydantoingruppen enthaltenden Verbindungen.**

(30) Priorität: **16.12.78 DE 2854442**

(43) Veröffentlichungstag der Anmeldung:
**25.06.80 Patentblatt 80/13**

(45) Bekanntmachung des Hinweises auf die Patenterteilung:
**15.12.82 Patentblatt 82/50**

(84) Benannte Vertragsstaaten:
**AT DE FR GB IT**

(56) Entgegenhaltungen:
**FR - A - 1 575 421**
**FR - A - 2 038 701**
**US - A - 3 397 253**

**CHEMICAL ABSTRACTS, Band 80, Nr. 24, 17. Juni 1974, Zusammenfassung Nr. 134041z, Seite 16, Columbus, Ohio, US**
**CHEMICAL ABSTRACTS, Band 77, Nr. 2, 10, Juli 1972, Zusammenfassung Nr. 7458d, Seite 133, Columbus, Ohio, US**

(73) Patentinhaber: **BAYER AG**
**Zentralbereich Patente, Marken und Lizenzen**
**D-5090 Leverkusen 1, Bayerwerk (DE)**

(72) Erfinder: **Lewalter, Jürgen, Dr.**
**Bergstrasse 88**
**D-5068 Odenthal (DE)**
Erfinder: **Rottmaier, Ludwig, Ing.-grad.**
**Berstrasse 85**
**D-5068 Odenthal (DE)**
Erfinder: **Merten, Rudolf, Dr.**
**Berta-von-Suttner-Strasse 55**
**D-5090 Leverkusen 1 (DE)**
Erfinder: **Zecher, Wilfried, Dr.**
**Treptower Strasse 6**
**D-5090 Leverkusen 1 (DE)**
Erfinder: **Dünwald, Willi, Dr.**
**Geschwister-Scholl-Strasse 16**
**D-5090 Leverkusen 1 (DE)**
Erfinder: **Schulte, Bernhard, Dr.**
**Südwall 80A**
**D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zur Herstellung von Hydantoingruppen enthaltenden Verbindungen

Die Erfindung betrifft Verfahren zur Herstellung von Hydantoingruppen enthaltenden Verbindungen durch Umsetzung von $\alpha$-Aminocarbonsäurederivaten und organischen Isocyanaten in Gegenwart von sauren Gruppen.

Verfahren zur Herstellung von Polyhydantoin-Kunststoffen durch Umsetzung von Glyzinesterderivaten und Polyisocyanaten sind bereits bekannt, wie beispielsweise aus der US-Patentschrift 3 397 253 = BE 678 282.

Diese Verfahrensweise hat nachfolgend noch zahlreiche Varianten erfahren, bei denen diese Hydantoin-Gruppen enthaltenden Polymeren durch Zugabe oder Einbau von weiteren funktionellen Gruppierungen wie Amid-, Imid- oder Estergruppen variiert werden. Dabei werden eine Vielzahl von unterschiedlichen Lösungsmitteln empfohlen (vgl. FR-PS 2 038 701, FR-PS 1 575 421, JA 73—14799).

Polyhydantoine bzw. Hydantoingruppen enthaltende Polymerisate mit dem gewünschten und geforderten Werteniveau konnten bisher ausschließlich in phenolischen Lösungsmitteln wie Phenol, Kresolen oder Xylenolen sowie deren Abmischungen hergestellt werden.

Inzwischen ist aber im Rahmen der Reinhaltung von Abwasser und Luft die Verwendung einiger Lösungsmittelklassen unerwünscht. Speziell die zur optimalen Hydantoinringsynthese offenbar erforderlichen phenolischen Lösungsmittel können zu starken Umweltbelastungen führen, weshalb schon heute ganz allgemein bei Applikationen aus derartigen Lösungsmitteln recht aufwendige Rückgewinnungsanlagen zu deren möglichst quantitativer Entfernung aus Abwasser bzw. Luft erforderlich werden.

Es wurde nun gefunden, daß man hochwertige Poly(thio)hydantoine bzw. (Thio)Hydantoinringe enthaltende Verbindungen mit dem hervorragenden, den technischen Anforderungen entsprechenden Wertniveau auch aus, gegebenenfalls polyfunktionellen, $\alpha$-Aminocarbonsäurederivaten und organischen, gegebenenfalls verkappten Iso(thio)cyanaten oder Iso(thio)cyanuratopolyiso(thiocyanaten) in $\gamma$-Butyrolacton, Acetophenon, Benzolsäuremethyl- oder -ethyl- ester, Benzylalkohol oder deren Gemische als Lösungsmittel erhält, wenn die Reaktanten in Gegenwart von Carboxylgruppenhaltigen Verbindungen, die neben den Carboxylgruppen noch wenigstens eine weitere funktionelle Gruppe enthalten, vermischt und bei Temperaturen von —10 bis 500°C, vorzugsweise bei 20 bis 400°C kondensiert werden.

Der Reaktionsverlauf ist überraschend, da speziell die zum Aufbau der Polymeren herangezogene Reaktion der Hydantoinbildung aus $\alpha$-Aminocarbonsäurederivaten und organischen Isocyanaten in der Regel bisher in phenolische Hydroxylgruppen enthaltenden Lösungsmitteln zur optimalen Hydantoinringbildung geführt werden konnten, während ihr Umsatz in phenolfreien Lösungsmitteln allenfalls zu untergeordneten Mengen an Hydantoinringsystemen, vorzugsweise aber zu komplizierteren, teilweise vernetzten Stoffgemischen geführt hat.

Die so hergestellten Polymeren können direkt, gegebenenfalls nach Zugabe von weiteren umweltfreundlichen, nicht phenolischen Lösungsmitteln, zu Klebern, Pulver, Folien, Kunststoffen verarbeitet werden.

Für das erfindungsgemäße Verfahren werden vorzugsweise polyfunktionelle, bevorzugt difunktionelle $\alpha$-Aminocarbonsäurederivate der allgemeinen Formel (I)

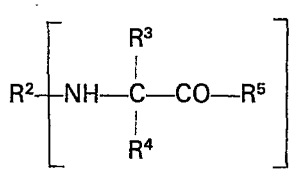

(I)

verwendet, worin $R^2$ für einen gegebenenfalls mit Halogen, Alkylmit $C_1$—$C_{10}$ und/oder Arylgruppen mit $C_6$—$C_{12}$ substituierten Alkylrest mit 2—20 C-Atomen, einen Arylrest mit 5—12 C-Atomen, einen Cycloalkylrest mit 5—12 C-Atomen, einen Alkyl-Arylrest mit 6—20 C-Atomen und einen Heteroatome wie N, und/oder O und/oder S im Ring enthaltenden Aryl- oder Cycloalkylrest mit 5—12 C-Atomen steht, $R^3$ und $R^4$ gleich oder verschieden Wasserstoff, einen Alkylrest mit $C_1$—$C_{20}$, einen Arylrest mit $C_5$—$C_{12}$ oder einen Aralkylrest mit $C_6$—$C_{20}$, $R^5$ eine Hydroxylgruppe, eine Aminogruppe, eine $C_1$—$C_{20}$ Alkylamino-, $C_1$—$C_{20}$ Dialkylamino-, $C_1$—$C_{20}$ Alkoxy- oder $C_5$—$C_{12}$ Aroxygruppe und n eine ganze Zahl von 2 bis 4, vorzugsweise 2 bedeuten. Sie sind aus der US Patentschrift 3 397 253 bekannt.

Aromatische Reste für $R^2$ sind bevorzugt insbesondere die von Benzol, Azobenzol, Naphthalin, Anthracen, Diphenyl, Triphenylmethan, Diphenylmethan und Diphenyläther. Diese Reste können auch ein- oder mehrfach substituiert sein, beispielsweise durch $C_1$—$C_{20}$ Alkyl-, (Methyl-), Halogen- (Chlor-), Nitro-, $C_1$—$C_{20}$ Alkoxy- (Methoxy-), $C_1$—$C_{20}$ Dialkylamino- (Dimethylamino-), Acyl- (Acetyl-), $C_2$—$C_{17}$ Carbalkoxy- (Carbometh- oder -äthoxy-) und Cyanogruppen. Bevorzugt sind die gegebenenfalls ein- oder zweifach durch Methyl und/oder Chlor oder ein- oder zweifach mit Carboxylgruppen substituierten

Reste, insbesondere von Benzol, Naphthalin, Diphenylmethan, oder Diphenyläther.

Die Reste $R^3$ und $R^4$ können auch als Glieder eines cyclischen $C_2$—$C_{20}$-Alkylrestes miteinander verknüpft sein, sowie durch Halogen (Chlor, Brom), Cyan, Hydroxycarbonyl, Amino-carbonyl, Alkoxycarbonyl oder Aroxycarbonyl substituiert sein.

Die Herstellung der erfindungsgemäß als Ausgangsverbindungen zu verwendenden $\alpha$-Amino-carbonsäurederivate ist im Prinzip bekannt und kann z.B. durch Umsetzung von aromatischen Aminen oder Aminocarbonsäuren mit Halogenessigsäure oder ihren Derivaten oder auch durch Kondensation mit Blausäure und Aldehyden oder Ketonen unter nachfolgender Umwandlung der Nitrilgruppe in z.B. Carbonsäure, Ester oder Amid erfolgen.

Hochwertige Hydantoinverbindungen werden erhalten, wenn die Carboxylgruppen-haltige Verbindung mindestens bis-funktionell ist, d.h., neben der Carboxylgruppe noch eine weitere funktionelle Gruppe wie z.B. eine Carboxyl-, Carbonsäureester-, cycl. Anhydrid-, Hydroxy-, Amino- oder Glycinderivatgruppe enthält. Vorzugsweise sind es Verbindungen der allgemeinen Formel (II)

$$(X)_z—R^1—COOH \qquad (II),$$

in der $R^1$ für einen z +1-wertigen, gegebenenfalls substituierten aliphatischen, vorzugsweise mit $C_1$—$C_{20}$, cycloaliphatischen, vorzugsweise mit $C_5$—$C_{12}$, aliphatische-aromatischen, vorzugsweise mit $C_6$—$C_{20}$, oder aromatischen, vorzugsweise mit $C_5$—$C_{12}$, Rest und einen Heteroatome wie N und/oder O und/oder S im Ring enthaltenden Aryl- oder Cycloalkylrest mit 5—12 C-Atomen,

z für eine ganze Zahl von 1 bis 4, vorzugsweise 1 oder 2, und

X für eine Carboxyl-, Glycinsäurederivat-, Hydroxy-, Amino-, Carboxylester- oder cyclische Anhydridgruppe steht.

Vorzugsweise werden als Carboxylgruppen-haltige Verbindungen Polycarbonsäuren, besonders bevorzugt Dicarbonsäuren eingesetzt.

Derartige Polycarbonsäuren können beispielsweise sein:

Oxalsäure, Malonsäure, Bernsteinsäure, Glutarsäure, Adipin-, Trimethyladipinsäure, Fumarsäure, Maleinsäure, Hexahydroterephthalsäure, Phthalsäure, Isophthalsäure, Terephthalsäure, Benzol-1,3,5-tricarbonsäure, Benzol-1,2,4-tricarbonsäure, Benzol-1,2,3-tricarbonsäure, Naphthalin-1,5-dicarbonsäure, Benzophenon-4,4'-dicarbonsäure, Diphenylsulfon-4,4'-dicarbonsäure, Butantetracarbonsäure, Tricarballylsäure, Ethylentetracarbonsäure, Pyromellithsäure, Benzol-1,2,3,4-tetracarbonsäure, Benzol-1,2,3,5-tetracarbonsäure, Benzol-1,2,4,5-tetracarbonsäure, Naphthalin-1,4,5,8-tetracarbonsäure sowie

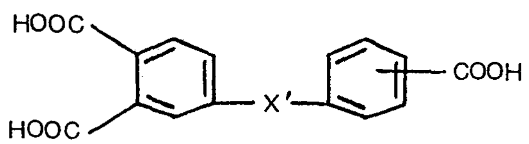

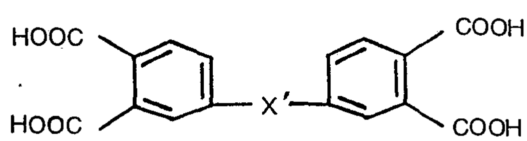

mit X' =

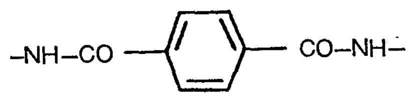

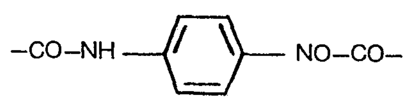

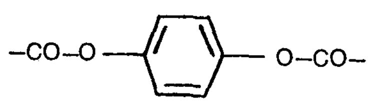

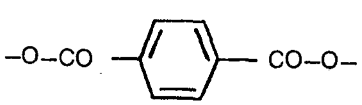

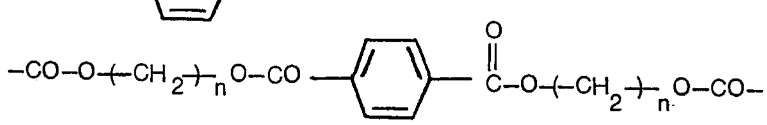

$-CO-O-(-CH_2-)_n-O-CO-$ $\qquad$ n = 2 – 6

$-O-$, $-S-$, $-SO_2-$, $-CO-$, $-CH_2-CH_2-$

$-N=N-$, $-CH_2-$, $CH_3-\overset{|}{\underset{|}{C}}-CH_3$

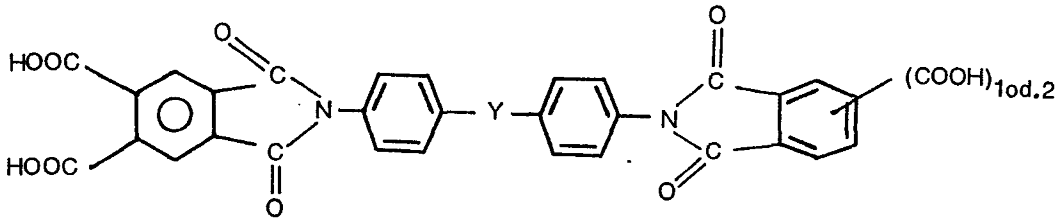

mit Y = —O—, —S—, —$SO_2$—,

—CO—, —N=N— —$CH_2$—$CH_2$—

—$CH_2$—, $CH_3$—C—$CH_3$

Die Polycarbonsäuren können, soweit strukturell möglich, auch partiell oder vollständig als cyclische Anhydridverbindungen eingesetzt werden, wenn im Zuge der erfindungsgemäßen Reaktion saure Gruppen entstehen können. Derartige Verbindungen können beispielsweise sein

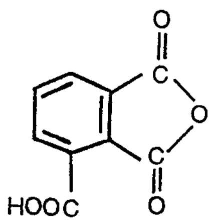

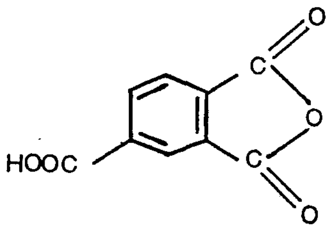

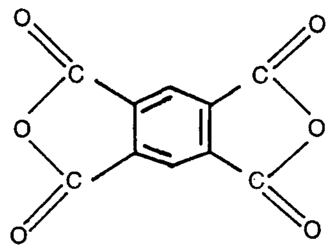

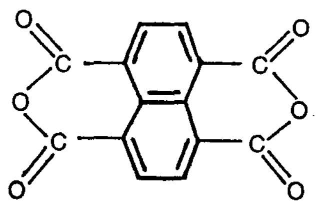

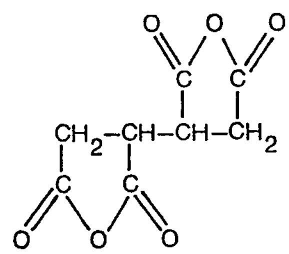

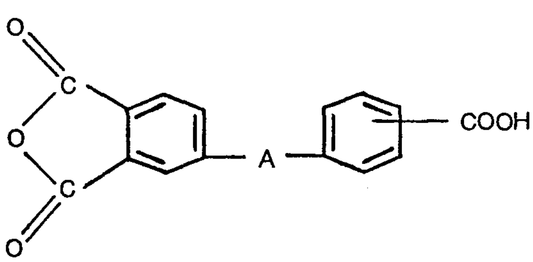

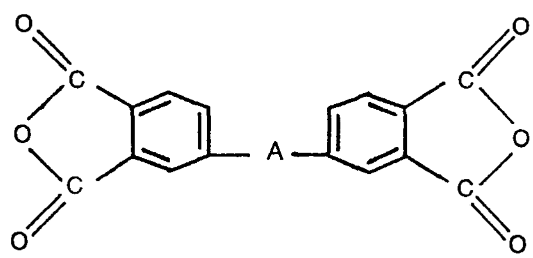 mit

A = 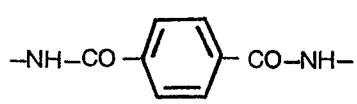

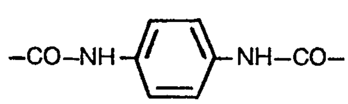

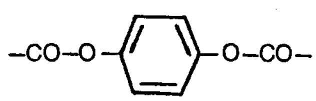

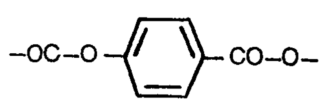

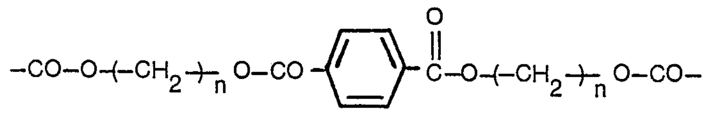

$-CO-O-(-CH_2-)_n-O-CO-$ $n = 2 - 6$

$-O-$, $-S-$, $-SO_2-$, $-CO-$, $-CH_2-CH_2-$,

$-N=N-$, $-CH_2-$, $CH_3-\overset{|}{\underset{|}{C}}-CH_3$

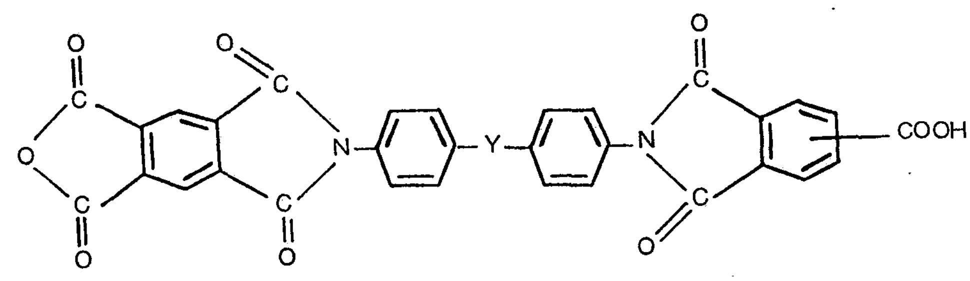

Y = $-O-$, $-S-$, $-SO_2-$,

$-CO-$, $-N=N-$, $-CH_2-CH_2-$,

$-CH-$, $CH_3-\overset{|}{\underset{|}{C}}-CH_3$

Die Polycarbonsäuren können auch oligomerer oder polymerer Natur sein. So können hier beispielsweise auch Bisbenzoldicarbonsäuren der Strukturformel

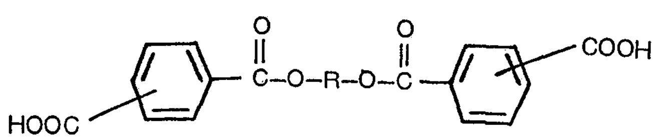

eingesetzt werden.

R bedeutet darin einen mindestens zweiwertigen aromatischen Rest mit $C_5$—$C_{12}$, einen gesättigten oder ungesättigten aliphatischen mit $C_2$—$C_{20}$, cycloaliphatischen mit $C_5$—$C_{12}$ Rest, in dem aromatische, cycloaliphatische oder heterocyclische Ringsysteme sowie Ether-, Keto-, Ester- oder Sulfonbrücken enthalten sein können, und der gegebenenfalls durch Halogene, Nitro- oder Alkoxygruppen mit $C_1$—$C_{20}$ substituiert sein kann.

Mögliche Beispiele für R sind:

$-(CH_2)_2-$, $-(CH_2)_2-$, 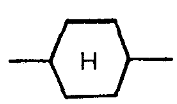 , 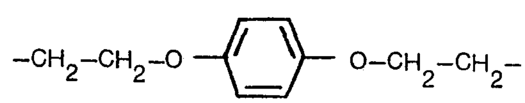

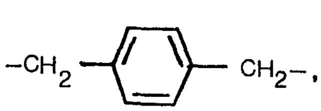 $-(CH_2)_2-O-(CH_2)_2-$, 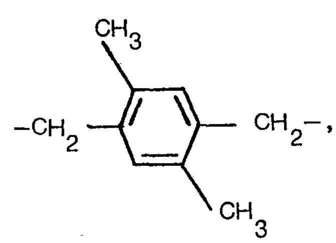

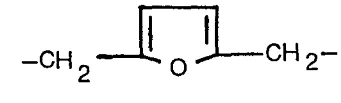 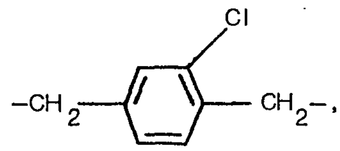 $-CH_2-CH=CH-CH_2-$

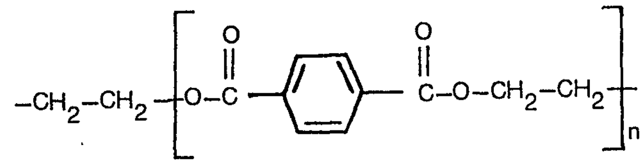

n = 1 – 7

Darüber hinaus können aber auch oligomere und/oder polymere saure Carbonsäureester der Strukturformel

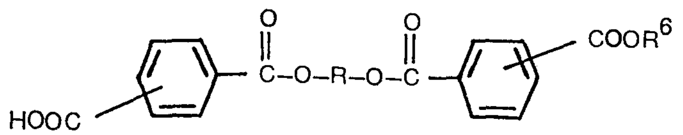

eingesetzt werden, worin R die oben bereits angeführte Bedeutung hat und $R^6$ ein gegebenenfalls substituierter aliphatischer mit $C_1$—$C_{20}$, aliphatisch-aromatischer mit $C_6$—$C_{20}$ oder aromatischer Rest mit $C_5$—$C_{12}$ bedeuten. Als Substituenten kommen in Frage:
Halogene, Nitro-, Cyano-, Hydroxyl-, Alkoxygruppen mit $C_1$—$C_{20}$ oder Aroxygruppen mit $C_5$—$C_{12}$.

Als Carboxylgruppen-haltige Verbindungen können auch Verbindungen eingesetzt werden, die neben mindestens einer Carboxylgruppe eine $\alpha$-Aminosäurederivatgruppe enthalten. Vorzugsweise sind es solche der allgemeinen Formel

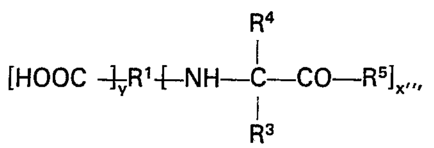

in der $R^1$, $R^3$, $R^4$ und $R^5$ die bereits oben definierte Bedeutung haben und y und x'' gleich oder verschieden unabhängig voneinander eine ganze Zahl von 1—3, vorzugsweise 1 und/oder 2 sein können. Diese Verbindungen sind zumindest teilweise auch an der Hydantoinringbildung beteiligt.

Die Herstellung dieser Verbindungen ist im Prinzip bekannt und kann gemäß US-Pat. 3 397 253 aus den entsprechenden $\alpha$-Aminocarbonsäuren erfolgen. Hierzu können beispielsweise 2-, 3- und 4-Aminobenzoesäure, 4-Chlor-3-aminobenzoesäure, 2- oder 4- oder 5-Aminoisophthalsäure, 1-Amino-anthrachinon-2-carbonsäure, 4-Aminoanthrachinon-1-carbonsäure, 4-Aminonaphthalin-1,8-dicarbonsäure, 2,4- und 3,4-Diaminobenzoesäure Aminoessigsäure, Aminocapronsäure usw. verwendet werden, die im übrigen auch direkt für das erfindungsgemäße Verfahren eingesetzt werden können.

Im Sinne des erfindungsgemäßen Verfahrens sind als Carboxylgruppen-haltige Verbindungen auch Hydroxycarbonsäuren der allgemeinen Formel

$$[HOOC \frac{}{}]_y R^1 [\frac{}{} OH]_k$$

geeignet, in der $R^1$ die oben aufgeführten Bedeutungen hat und y sowie k unabhängig voneinander eine ganze Zahl von 1—3, vorzugsweise 1 und/oder 2 sein können.

Als Beispiele derartiger Verbindungen seien Hydroxycarbonsäuren wie Glykolsäure, Milchsäure, Mandelsäure Zitronensäure, Weinsäure, 2- oder 3- oder 4-Hydroxybenzoesäuren, sowie Hydroxybenzoldicarbonsäuren angeführt.

Die ganz besonders bevorzugt eingesetzten carboxylgruppenhaltigen Verbindungen sind Isophthalsäure und/oder Trimellithsäure und/oder Trimellithsäureanhydrid und/oder Terephthalsäure, sowie die isomeren, Carboxylgruppen enthaltenden Anilinoisobuttersäurederivate bzw. die entsprechenden Oligoester dieser Säuren mit untergeordneten Mengen Ethylenglykol, Propylenglykol, Glycerin, Trimethylolpropan und/oder Trishydroxyethylisocyanurat.

Als erfindungsgemäß einzusetzende Ausgangskomponenten kommen aliphatische, cycloaliphatische, araliphatische, aromatische und heterocyclische Polyisocyanate in Betracht (vgl. Annalen 562, Seiten 75 bis 136), beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -

1,4-diisocyanat sowie beliebige Gemische dieser Isomeren, 1-Isocyanato-3,3,5-trimethyl-5-isocyanato-methyl-cyclohexan (DAS 1 202 785), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4-diisocyanat, Naphthylen-1,5-diisocyanat, Triphenylmethan-4,4',4''-triisocyanat, Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden, perchlorierte Arylpolyisocyanate, wie sie z.B. in der deutschen Auslegeschrift 1 157 601 beschrieben werden, Carbodiimidgruppen aufweisende Polyisocyanate, wie sie in der deutschen Patentschrift 1 092 007 beschrieben werden, Diisocyanate, wie sie in der US-Patentschrift 3 492 330 beschrieben werden, Allophanatgruppen aufweisende Polyisocyanate, wie sie z.B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z.B. in den deutschen Patentschriften 1 022 789, 1 222 067 und 1 027 394 sowie in den deutschen Offenlegungsschriften 1 929 034 und 2 004 048 beschrieben werden.

Als Isocyanuratopolyisocyanate werden vorzugsweise Verbindungen der allgemeinen Formel

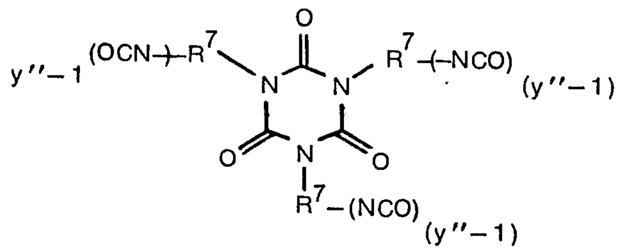

eingesetzt, wobei $R^7$ der noch zu definierende organische Rest der Isocyanatverbindung und y'' eine ganze Zahl von 1—4 sein sollen. Solche Verbindungen können beispielsweise auch gemäß DAS 1 035 362 separat oder in situ aus entsprechenden organischen Isocyanaten hergestellt werden.

Ferner Urethangruppen aufweisende Polyisocyanate, wie sie z.B. in der belgischen Patentschrift 752 261 oder in der US-Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394, in der britischen Patentschrift 889 050 und in der französischen Patentschrift 7 017 514 beschrieben werden, durch Telomerisationsreaktionen hergestellte Polyisocyanate, wie sie z.B. in der belgischen Patentschrift 723 640 beschrieben werden, Estergruppen aufweisende Polysiocyanate, wie sie z.B. in den britischen Patentschriften 956 474 und 1 072 956, in der US-Patentschrift 3 567 763 und in der deutschen Patentschrift 1 231 688 genannt werden, Umsetzungsprodukte der obengenannten Isocyanate mit Acetalen gemäß der deutschen Patentschrift 1 072 358.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Als Monoisocyanate können neben den Polyisocyanaten in untergeordneten Mengen im Sinne der Erfindung aliphatische, cycloaliphatische, aliphatisch-aromatische und aromatische, gegebenenfalls durch Heteroatome substituierte Verbindungen mit einer NCO-Gruppe im Molekül eingesetzt werden, so beispielsweise Alkylisocyanate wie Ethyl-, Methyl-, Butyl-, Dodecyl- und Stearylisocyanat, aromatische, gegebenenfalls substituierte Monoisocyanate wie Phenyl-, Tolyl-, Isopropyl-, Nonylisocyanat, Nitro-, Alkoxy, Aroxy-, Chlor-, Dichlor-, Trichlor-, Tetrachlor-, Pentachlor-, Benzyl-, Bromphenyl-isocyanat oder Isocyanatobenzoesäureester, -phthalsäureester, isophthalsäureester, Isocyanatobenzonitril, cycloaliphatische Isocyanate wie Cyclohexylisocyanat und ungesättigte Isocyanate wie Allyl-, Oleyl-, Cyclohexenylisocyanat.

Vorzugsweise eignen sich Isocyanate der allgemeinen Formel (III)

$$R^7—(NCO)_{y''} \qquad (III)$$

in denen $R^7$ für einen, gegebenenfalls mit Halogen, Alkyl- mit $C_1—C_{10}$ und/oder Arylgruppen mit $C_5—C_{12}$ substituierten Alkylrest mit 2—20 C-Atomen, einen Arylrest mit 5—12 C-Atomen, einen Cycloalkylrest mit 5 bis 12 C-Atomen, einen Alkyl-Arylrest mit 6—20 C-Atomen und einen Heteroatome wie N, O oder S enthaltenden Aryl- oder Cycloalkylrest mit 5—12 C-Atomen steht. —y'' ist eine ganze Zahl von 1—4, vorzugsweise 1—3, besonders bevorzugt 2. Besonders bevorzugt sind aliphatische Reste mit 2—12 C-Atomen oder ein Arylrest wie Phenyl, Tolyl, Naphthyl, Diphenylmethan- und Diphenylätherreste.

Bevorzugt verwendet werden die technisch leicht zugänglichen Gemische aus Toluylendiisocyanaten, m-Phenylendiisocyanat, sowie phosgenierte Kondensate aus Anilin und Formaldehyd mit Polyphenylen-methylen-struktur und die symmetrischen Verbindungen 4,4'-Diisocyanatodiphenylmethan, 4,4'-Diisocyanatodiphenyläther, p-Phenylendiisocyanat und 4,4'-Diisocyanatodiphenyldimethylmethan sowie Isophorondiisocyanat und Hexamethylendiisocyanat.

Die erfindungsgemäß als Blockierungs - mittel besonders bevorzugten Hydroxyalkyläther sind Umsatz mit reaktiven Wasserstoff enthaltenden Verbindungen zugänglichen und unter den Reaktionsbedingungen als Isocyanat-Abspalter reagierenden Derivate eingesetzt werden.

Vorzugsweise werden als Abspalter die Additionsprodukte aus Lactamen, Oximen und CH-aciden Verbindungen sowie die aus aliphatischen Mono- und Polyhydroxy-Verbindungen erhaltenen Carbamidsäureester, beispielsweise der allgemeinen Formel

$$R^{7}(-NH-\underset{\underset{O}{\|}}{C}-O-M) \quad \text{bzw.} \quad \left[-\underset{\underset{O}{\|}}{C}-NH-R^{7}-NH-\underset{\underset{O}{\|}}{C}-O-Q-O\right]_{q}$$

eingesetzt, worin $R^7$ und y'' die oben angegebene Bedeutung haben und M der organische Rest einer Monohydroxyverbindung bzw. Q der organische Rest einer bis- oder trisfunktionellen Hydroxyverbindung, vorzugsweise M und Q, gleich oder verschieden, ein aliphatischer Rest mit 1—10 C-Atomen, ein cycloaliphtischer Rest mit 5—12 C-Atomen und/oder ein aliphatisch-aromatischer Rest mit 7—12 C-Atomen ist, die jeweils noch mit Alkyl- mit $C_1C_{12}$ und/oder Arylgruppen mit $C_5$—$C_{12}$ substituiert sein können, und q für eine ganze Zahl von 1 bis 1000, vorzugsweise 1 bis 100 steht.

Als Beispiele seien die Carbamidsäureester aus aliphatischen Monoalkoholen wie Methanol, Äthanol, Propanol, Isopropanol, Butanol, Isobutanol, Cyclohexanol, Allylalkohol, Benzylalkohol und aliphatische Di- oder Polyole wie Äthylenglykol, Trimethylolpropan, Glycerin und Trishydroxyäthylisocyanurat, weiterhin die Additionsprodukte mit Pyrrolidon-(2), Caprolactam, Butanon-oxim, Malonester, Acetessigester und Acetophenon aufgeführt.

Die Isocyanat-Abspalter können als solche eingesetzt oder erst in situ durch Umsetzung mit den entsprechenden Reaktanten erzeugt werden.

Anstelle der genannten (Poly)Isocyanate können auch die analogen (Poly)-Isothiocyanate als Ausgangsmate-rialien benutzt werden.

Die erfindungsgemäß als Blockierungs — mittel besonders bevorzugten Hydroxyalkyläther sind beispielhaft Verbindungen der allgemeinen Formel

$$R^8\!-\!(OR^9)_p\!-\!OH,$$

in der $R^8$ einen gegebenenfalls substituierten aliphatischen Rest mit $C_1$—$C_{20}$, vorzugsweise $C_1$—$C_8$, cycloaliphatischen Rest mit $C_5$—$C_{12}$, vorzugsweise $C_5$—$C_8$, aliphatischaromatischen Rest mit $C_6$—$C_{16}$ oder aromatischen Rest mit $C_5$—$C_{14}$, der z.B. mit Alkoxy- oder Aroxy-Gruppen substituiert sein kann, $R^9$ einen aliphatischen Rest mit 2—20 C-Atomen und p eine ganze Zahl von 1—100, bevorzugt 1—4 bedeuten. Vorzugsweise werden erfindungsgemäß solche Hydroxyalkyläther eingesetzt, die pro Molekül eine Hydroxygruppe enthalten und in denen $R^9$ einen Rest mit zwei C-Atomen in der Kette, die beispielsweise durch Alkylgruppen substituiert sein können, bedeutet, z.B. die Methyl-, Isopropyl-, Cyclohexyl-, Benzyl-, Phenyl- und Methoxyethyl, -ethylenglykol- und -propylenglykol- bzw. -diethylenglykol- und dipropylenglykol-monoether.

Für das erfindungsgemäße Verfahren werden Benzylalkohol, Acetophenon, $\gamma$-Butyrolacton, Benzoesäurealkylester, sowie deren Gemische als Lösungsmittel verwendet.

Als Verschnittmittel sind außerdem aliphatische und aromatische Kohlenwasserstoffe wie Cyclohexan, Xylol, Toluol und deren technische Gemische wie Solvesso 100 und Solventnaphtha geeignet.

Es müssen jedoch keine Lösungsmittel, gegebenenfalls können stöchiometrische Blockmittelmengen verwendet werden.

Zur erfindungsgemäßen Reaktion sind bekanntlich gemäß den obigen Ausführungen alle Polycarbonsäuren, deren partielle oder vollständige Ester und/oder Anhydride sowie alle Polyole des Standes der Technik geeigent und verwendbar.

Beispiele derartiger Polycarbonsäuren sind oben bereits angeführt worden. Sie können dabei teilweise oder vollständig als Ester der oben bereits als Blockmittel aufgeführten Alkohole und/oder teilweise oder vollständig in Form ihrer Anhydride eingesetzt werden.

Der Umsatz der gegebenenfalls polyfunktionellen, mit den Polycarbonsäuren und/oder Anhydriden und/oder Oligoestern abgemischten bzw. verknüpften Aminocarbonsäurederivate mit den organischen Isocyanaten, weiteren Polycarbonsäuren und/oder deren Ester und/oder Anhydriden und Polyolen zu den beanspruchten Hydantoinringe enthaltenden Polymeren kann in Lösungsmitteln, die unter den Reaktionsbedingungen nicht reagieren oder lockere, weiterreagierende Additionsverbindungen bilden oder in Substanz oder in einem Überschuß einer der Reaktionskomponenten durchgeführt werden.

Zur Durchführung der erfindungsgemäßen Verfahren werden die Reaktionskomponenten mit oder ohne Lösungsmittel und/oder Blockierungsmittel einige Minuten bis zu mehreren Stunden bei Temperaturen von —20 bis 500°C vorzugsweise bei 20 bis 400°C gehalten. Der Reaktionsverlauf kann über die Gasentwicklung und die IR-Spektren verfolgt werden. Die charakteristischen Banden der erfindungsgemäßen Polymere, vorzugsweise für die Hydantoinring- und Amid-, sowie gegebenenfalls Imid-Struktur können eindeutig durch IR-Spektren belegt werden.

Die hoch molekularen Hydantoinringe enthaltenden Verbindungen besitzen Lösungsviskositäten von 300 bis 500 000 mPas, vorzugsweise von 500—200 000 mPas, die beispielsweise in 30%igen Lösungen in Benzylalkohol, Carbitol, $\gamma$-Butyrolacton usw. bei 25°C bestimmt werden.

Im allgemeinen werden pro Val der erfindungsgemäßen Kombination aus polyfunktionellen $\alpha$-Aminocarbonsäurederivaten und sauren Gruppen und/oder Oligoestern 1 Val eines organischen Isocyanates eingesetzt, doch sind auch sehr weitgehende Abweichungen von diesen Mengenverhältnissen möglich, um das Eigenschaftsprofil der erfindungsgemäßen Polymeren jedem möglichen Anwendungsfall anpassen zu können. Allerdings sind nur solche Molverhältnisse zweckmäßig, die zumindest schmelzbare und/oder in organischen, nichtphenolische Lösungsmitteln universell lösliche Produkte ergeben. Vorzugsweise werden mindestens 0,1, höchstens 49 Mol-% an polyfunktionellen $\alpha$-Aminocarbonsäurederivaten zur Polykondensation verwendet. Beispielsweise werden aus jeweils bisfunktionellen Reaktanten in Abhängigkeit von den stöchiometrischen Verhältnissen hochmolekulare Polyhydantoine, Hydantoinisocyanate oder Hydantoincarbonsäuren bzw. deren Anhydride erhalten.

Im einzelnen wird man demnach die Menge der sauren Gruppen so vorgeben, daß sie in Kombination mit der Menge des gegebenenfalls polyfunktionellen $\alpha$-Aminocarbonsäurederivates der insgesamt vorhandenen organischen Isocyanatmenge Äquivalent ist. Deren Umsatz führt dann zu den erwähnten Amidgruppen, gegebenenfalls Imidgruppen und Hydantoinringe enthaltenden Kunststoffen.

Andererseits können sowohl die organischen Isocyanate wie auch die sauren Gruppen in beliebigen Mengen, vorzugsweise im Überschuß eingesetzt und gegebenenfalls gleichzeitig oder abschließend mit gegebenenfalls mehrwertigen Aminen, gegebenenfalls mehrwertigen Alkoholen, wie beispielsweise Ethylenglykol, Dipropylenglykol, Trimethylolpropan, Glycerin, Trishydroxyethylisocyanurat und/oder der Kombination aus Cyanursäuretriarylestern und Polyolen und/oder gegebenenfalls mehrwertigen Carbonsäuren und/oder deren Ester und/oder deren Anhydriden, beispielsweise auf Basis der obengenannten Polycarbonsäuren, vorzugsweise der Phthalsäure, Isophthalsäure, Terephthalsäure, Trimellitsäure, Pyromellithsäure, Butantetracarbonsäure usw., gegebenenfalls unter Einsatz weiterer Polyisocyanate, gegebenenfalls auch von Polyisocyanuratopolyisocyanate bzw. deren Abspalter, sowie gegebenenfalls unter Zusatz von Hilfs- und Zusatzstoffen wie $\varepsilon$-Caprolactam, $\varepsilon$-Caprolacton usw. zu linearen und/oder verzweigten Hydantoinringe enthaltenden Kunststoffen mit beispielsweise Ester-, Carbamidester-, Amid- und/oder Imidgruppen von guter Löslichkeit, hervorragender Temperaturbeständigkeit, hoher Elastizität und ausgezeichnetem Hitzeschockverhalten umgesetzt werden.

Mit ähnlichem Erfolg können die erfindungsgemäßen Kondensationsprodukte, gegebenenfalls auch ihre Vorstufen, Polyestern, vorzugsweise Hydroxylgruppen enthaltenden Polyestern, beispielsweise aus Maleinsäureanhydrid, Phthalsäureanhydrid, und/oder Maleinsäure, Fumarsäure, Bernsteinsäure, Phthalsäure, Isophthalsäure, Terephthalsäure, Trimellithsäure und/oder Trimelithsäureanhydrid und/oder deren Ester, Ethylenglykol, Dipropylenglykol, Glycerin, Trimethylolpropan und/oder Trishydroxyethylisocyanurat und/oder der Kombination aus Cyanursäuretriarylestern und Polyolen, Polyethern, beispielsweise aus Ethylenoxid und/oder Bis-(hydroxyphenyl)-propan und Epichlorhydrin, Polyurethanen, Polyamiden, Polyolefinen, Polyacetalen, Polyepoxiden, Polyimiden, Polyamidimiden, Polyesterimiden, Polyesteramidimiden, Polyimino-Polyestern, Polyimidisocyanaten usw. zugemischt und gegebenenfalls an- und/oder einkondensiert oder die erfindungsgemäße Reaktion in Gegenwart dieser Komponenten durchgeführt werden. In allen Fällen entstehen dabei modifizierte Polymere, die neben den (Thio)-Hydantoinringen gegebenenfalls zusätzliche Ether-, Carbamidester-, Carbonsäureester-, -amid-, -imid-, -esteramid-, -esterimid-, -amidimid- und/oder -esteramidimidgruppierungen enthalten.

Die Mengenverhältnisse dieser Zusatzstoffe können in weiten Grenzen schwanken, vorzugsweise werden bezüglich des erfindungsgemäßen Kondensates 10—500 Gew.-% eingesetzt.

Zur weiteren Beschleunigung der Polymerisationsreaktionen sind die bekannten Katalysatoren wie Basen, beispielsweise Triethylamin, N-Methylmorpholin, Endoethylenpiperazin, wie Metalle, insbesondere von Eisen, Blei, Zink Zinn, Kupfer, Mangan, Kobalt, Titan, beispielsweise Titantetrabutylat, Titanaminoalkohol, Eisenacetylacetonat, Dibutylzinnlaurat, Bleiacetat, Zinkoctoat oder Phosphorverbindungen wie Trialkylphosphin, zu verwenden.

Zuweilen ist es vorteilhaft, die Reaktion in mehreren Stufen durchzuführen. So kann beispielsweise in einer ersten Stufe, gegebenenfalls in einem Lösungs- und/oder Blockmittel ein Addukt oder Kondensat hergestellt werden, das dann bei höherer Temperatur, eventuell unter Verdampfung des Lösungsmittels, gegebenenfalls nach Zusatz von Blockierungsmitteln unter Cyclisierung und/oder Kettenverlängerung und/oder Vernetzung in das gegebenenfalls hochmolekulare Kondensationsprodukt übergeht. Wird dieses dann zur Beschichtung verwendet, so kann es auch aus Schmelzen oder wäßrigen Systemen oder als Pulver appliziert werden.

Eine weitere Ausfuhrungsform des erfindungsgemäßen Verfahrens beansprucht die Verwendung

beliebiger Isocyanatgemische, wodurch beispielsweise in beliebigen Teilschritten andere organische Isocyanate eingesetzt werden können.

Im Rahmen des erfindungsgemäßen Verfahrens können Produkte mit gegebenenfalls verkappten Isocyanatgruppen entstehen. Durch Verwendung von Isocyanatgemischen, beispielsweise aus poly- und monofunktionellen Isocyanaten ist der Polymerisationsgrad der erefindungsgemäßen Reaktion zu steuern. Demnach können Produkte mit vergleichbarem Polymerisationsgrad, aber geringerem, gegebenenfalls verkapptem Isocyanatgehalt durch Mitverwendung berechneter Anteile an Monoisocyanaten hergestellt werden. Geeignet sind beispielsweise Phenylisocyanat, $\alpha$-Naphthylisocyanat, Isocyanatobenzoesäureester, Isocyanatoessigsäureester.

Mitunter wird die Umsetzung zweckmäßigerweise unter einem inerten Schutzgas wie $N_2$ oder Argon durchgeführt. Schließlich kann die erfindungsgemäße Reaktion in kontinuierlicher oder diskontinuierlicher Ausführung oder gegebenenfalls in Autoklaven unter Druck zum Zwecke einer höheren Reaktionstemperatur erfolgen.

Die nach dem erfindungsgemäßen Verfahren zugänglichen erfindungsgemäßen Polyhydantoinverbindungen besitzen eine besondere Temperaturbeständigkeit sowie eine gute Löslichkeit auch in vorzugsweise phenolfreien Lösungsmitteln.

Die mit den erfindungsgemäßen Polykondensaten modifizierten Kunststoffe zeigen verbesserte Temperaturverhalten sowie verbesserte Löslichkeit, unter anderem auch in umweltneutralen Lösungsmitteln. Die Polymeren können zur Herstellung temperaturbeständiger Kleber, Fasern, Folien und Kunststoffe verwendet werden. Ihre Eigenschaften können je nach Einsatzgebiet durch Zusatz von Füllstoffen, Pigmenten, nieder- und hochmolekularen Komponenten wie Polyurethane, Polyester, Polyesterimide, Polyimide, Polyamidimide, Polyamide, Polyesteramidimide, Polyvinylacetale, Epoxide, Polycyanate, Siliconharze, in weiten Grenzen variiert werden.

## Beispiel 1

223,2 g 3-(N-Ethoxycarbonylmethyl-) aminobenzoesäure werden bei ca. 100°C in
300 g $\gamma$-Butyrolacton gelöst, ab 45 bis 60°C mit der Lösung von
250,2 g 4,4'-Diisocyanatodiphenylmethan in
300 g Toluol vermischt, ca. 3 Stunden bei 25°C bis 35°C nachgerührt, darauf mit
0,5 g Endoethylenpiperazin versetzt, langsam auf 150 bis 160°C erhitzt und dabei Ethanol/Toluol/$CO_2$ ausgetragen. Anschließend kondensiert man ca. 6 Stunden bei 200°C. Im Zuge steigender Viskosität wird mit
595 g $\gamma$-Butyrolacton verdünnt.
Viskosität der Lieferform (30%ig): 2300 mPa s 20°C.

Das nach einer Methanolfällung verbleibende Bindemittel besitzt im IR-Spektrum die den Hydantoinen und Carbonsäureamiden eigenen Banden.

## Beispiel 2

223,2 g 3-(N-Ethoxycarbonylmethyl-) aminobenzosäure werden bei ca. 100°C in
300 g $\gamma$-Butyrolacton gelöst, ab 45 bis 60°C mit
325,3 g 4,4'-Diisocyanato-diphenylmethan versetzt, ca. 3 Std. bei 25°C bis 35°C gerührt, dann mit
0,5 g Endoethylenpiperazin versetzt und langsam bei 150—160°C Ethanol/$Co_2$ ausgetragen. Anschließend kondensiert man 5 Stunden bei 200°C.
Mit zunehmender Viskosität verdünnt man mit höchstens
200 g Benzoesäuremethylester, verdünnt aber erst nach 5 Stunden 200°C mit
285 g Benzylalkohol, homogenisiert nach ca. 2 Stunden bei ca. 200°C.
Viskosität der Lieferform (40%ig): 7240 mPa s 20°C.
Die ca. 40%ige Oligohydantoinlacklösung wird mit
1612 g Cyclohexanon verdünnt und mit
1975 g eines Polyesters aus 4,0 Mol Dimethylterephthalat, 0,8 Mol Trimellithsäureanhydrid, 0,9 Mol Terephthalsäure, 2,0 Mol Tris-(2-hydroxyethyl)-isocyanurat, 0,5 Mol Glycerin, 7,0 Mol Ethylenglykol, 200 g Solvesso, 3,0 g Bleiacetat und 1,0 g Butyltitanat mit einem Hydroxylgruppengehalt von ca. 4,5 Gew.-% versetzt.
Man homogenisiert das Gemisch 1 Stunde bei 180 bis 200°C, gibt dann bei 80°C bis 100°C die Lösung von
16 g Titantetrabutylat in
32 g Acetylaceton hinzu und rührt noch 1 Stunde bei 70 bis 80°C nach.
Die Viskosität der ca. 40%igen Lacklösung beträgt ca. 1720 mPas 20°C.

Ein mit dieser Lacklösung beschichtetes und bei 250°C während 15 Minuten und bei 300°C während 10 Minuten eingebranntes Erichsen-Blech erhält einen Lackfilm von guter Elastizität, Haftfestigkeit und Chemikalienbe-ständigkeit sowie eine Bleistifthärt von 5 H. Eine aus diesem Lack z.B. auf Glas in der bekannten Weise hergestellte Folie besitzt gute mechanische Eigenschaften, eine hohe Wärmebeständigkeit und einen Erweichungspunkt von mindestens 330°C.

Beispiel 3

33,2 g Isophthalsäure und
16,6 g Terephthalsäure werden mit
700 g Acetophenon vermischt, ca. 5 Minuten bei 170—180°C temperiert, dann bei 50°C mit
278,95 g N,N'-Bis-(2-methoxycarbonylpropyl-2)-4,4'-diaminodiphenylmethan versetzt und schließlich bei 30—50°C mit der Lösung von
250,2 g 4,4'-Diisocyanatodiphenylmethan in
300 g Toluol verrührt
Nach ca. 5 Stunden bei 30—40°C versetzt man mit
0,5 g Endoethylenpiperazin, heizt langsam über 60, 80, 120, 150 auf 175°C, trägt dabei $CO_2$, Methanol, Toluol usw. aus und kondensiert schließlich das Gemisch 1 Stunde bei 190°C, 3 Stunden bei 200—205°C und 2 Stunden bei 205—210°C.
Im Zuge steigender Viskosität wird mit
485 g Benzoesäuremethylester verdünnt und ca. 1 Stunde bei 170—150°C nachgerührt.
Die ca. 30%ige Lacklösung besitzt eine Viskosität von 65 000 mPas 20°C.

Das nach einer Methanolfällung verbleibende Bindemittel besitzt im IR-Spektrum die den Hydantoinen und Amiden eigenen Banden.

Beispiel 4

33,2 g Isophthalsäure und
8,3 g Terephthalsäure werden bei Raumtemperatur unter $N_2$ mit
300 g $\gamma$-Butyrolacton,
200 g Benzoesäureethylester und
200 g Toluol vermischt, dann mit
298.9 g N,N'-Bis-(2-methoxycarbonylpropyl-2)-4,4'-diaminodiphenylmethan versetzt und ab 25—35°C mit
325,3 g 4,4'-Diisocyanatodiphenylmethan verrührt. Man rührt 3 Stunden bei ca. 50°C nach, versetzt mit
0,5 g Endoethylenpiperazin, heizt unter Austragung von Methanol, Toluol, $Co_2$ usw. rasch auf 150—160°C und kondensiert schließlich ca. 5 Stunden bei 200—205°C.
Im Zuge steigender Viskosität wird mit
491 g Benzylalkohol verdünnt und ca. 1 Stunde bei ca. 200—205°C nachgerührt.
Die ca. 40%ige Oligohydantoinlacklösung besitzt eine Viskosität von 8 200 $mPas_{20°C}$. Sie wird mit
1000 g Benzylalkohol,
500 g Benzoesäuremethylester und
480 g Acetophenon verdünnt und mit
1321 g eines Polyesters aus 4,7 Mol Dimethylterephthalat, 1,0 Mol Terephthalsäure, 1,9 Mol Tris(2-hydroxyethyl)-isocyanurat, 0,6 Mol Trimethylolpropan, 10,0 Mol Ethylenglykol, 300 g Solvesso, 3,0 g Bleiacetat und 1,0 g Butyltitanat mit einem Hydroxylgruppengehalt von ca. 4,5 Gew.-% versetzt.
Man homogenisiert das Gemisch 1 Stunde bei 180—200°C, gibt dann bei 100—80°C die Lösung von
20 g Titantetrabutylat in
40 g Acetylaceton hinzu und rührt noch 1 Stunde bei 70—80°C nach.

Die Viskosität der ca. 40%igen Lacklösung liegt bei ca. 1450 $mPas_{20°C}$. Beim Eindampfen und Aushärten der auf einer Glasplatte ausgestrichenen Lackprobe entsteht eine klare, elastische Folie, deren IR-Spektrum die für Hydantoin-, Imid-, Ester-, Amid-, Esteramidimidstrukturen (usw.) typischen Banden besitzt.

Beispiel 5

74,8 g Isophthalsäure werden unter $N_2$ mit
150 g $\gamma$-Butyrolacton und
200 g Toluol vermischt, dann mit
298,9 g N,N'-Bis-(2-methoxycarbonylpropyl-2)-4,4'-diamino-diphenylmethan versetzt und darauf ab 35—40°C mit
375,4 g 4,4'-Diisocyanatodiphenylmethan verrührt. Man rührt ca. 12 Stunden bei Raumtemperatur nach, versetzt dann bei ca. 30—40°C mit der Lösung von
150 g 4,4'-Diisocyanatodiphenylmethan in
100 g Toluol, rührt 1 Stunde bei 50°C nach, fügt
0,5 g Endoethylenpiperazin und
200 g Terephthalsäuredimethylester hinzu, homogenisiert und heizt unter Austragung, gegebenenfalls unter 266 mbar von $CO_2$, Methanol, Toluol usw. rasch über 160°C auf 200°C und kondensiert ca. 3 Stunden bei 200—205°C. Anschließend werden ab 170°C mit
345,8 g Trimellithsäureanhydrid versetzt, homogenisiert und 1 Stunde bei 190°C, 3 Stunden bei 200—205°C und 1 Stunde bei 205—215°C kondensiert.

Danach wird das Gemisch bei ca. 170°C mit

518,5 g Terephthalsäuredimethylester,
653,0 g Tris-(2-hydroxyethyl)-isocyanurat,
3,0 g Bleiacetat,
1,0 g Butyltitanat und
50 g Xylol versetzt, homogenisiert und dann in ca. 6 Stunden (über 170°C bei 200—220°C soweit kondensiert, bis kein Destillat unter 150°C mehr übergeht. Schließlich versetzt man bei 170°C mit
184 g Ethylenglykol und
46 g Glycerin, kondensiert nochmals bei 200—220°C bis kein Destillat mehr unter 150°C anfällt und kondensiert dann bei 210—230°C zunächst direkt, schließlich unter ca. 266 mbar soweit, daß das mit $\gamma$-Butyrolacton auf ca. 50% verdünnte Harz eine Viskosität von ca. 12 000 $mPas_{20°C}$ besitzt.

Die ca. 50%ige Lacklösung besitzt eine Viskosität von 11 300 $mPas_{20°C}$.

Dieser Lack kann z.B. auf Glas in an sich bekannter Weise zu einem Film verarbeitet werden. Die so hergestellten Folien besitzen gute mechanische Eigenschaften, eine hohe Wärmebeständigkeit mit einem Erweichungspunkt oberhalb 330°C sowie eine gute Schrumpffestigkeit und hervorragende elektrische Isolationswerte. Ihr IR-Spektrum zeigt die typischen Banden der enthaltenen Hydantoin-, Amid-, Imid-, Ester- und Isocyanuratstrukturen.

## Beispiel 6

800,0 g der Lösung des N,N'-Bis-(2-methoxycarbonylpropyl-2)-4,4'-diaminodiphenylmethan in einem Gemisch aus $\gamma$-Butyrolacton (40%) und Toluol (60%) (N-Gehalt 2,63%) werden unter $N_2$ mit
8,3 g Isophthalsäure und
76,8 g Trimellithsäureanhydrid sowie ab 30°C mit
375,3 g 4,4'-Diisocyanatodiphenylmethan versetzt. Man homogenisiert mindestens 1 Stunde bei 30—45°C, versetzt dann mit
0,5 g Triäthylendiamin und trägt dann unter Erwärmung bis auf ca. 180°C den größten Teil des Toluols aus. Nach ca. 30 Minuten bei 180°C werden bei ca. 120°C
150,0 g 4,4'-Diisocyanatodiphenylmethan,
345,8 g Trimellithsäureanhydrid und
200,0 g Acetophenon eingetragen und das Gemisch ca. 4 Stunden bei 200°C gehalten. Schließlich gibt man bei 170—180°C
175,0 g Terephthalsäuredimethylester,
271,2 g Tris-(2-hydroxyäthyl)-isocyanurat
1,0 g Butyltitanat und
3,0 g Bleiacetat hinzu, versetzt nach ca. 4 Stunden bei 200°C mit
370,0 g Äthylenglykol und erhitzt noch ca. 2 Stunden auf bis zu 220°C.

Es werden 1665,0 g eines spröden Harzes mit einem Feststoffgehalt von ca. 85,6% und einer Viskosität von 26 000 mPas, gemessen in 50%iger Butyrolactonlösung von 20°C, erhalten.

Nach Erhitzen auf 230—250°C erhält man einen bis 400°C unschmelzbaren Polyhydantoinkörper, der im IR-Spektrum die für Hydantoine, Ester, Amide und Imide typischen Absorptionen aufweist.

## Beispiel 7

525,4 g 4,4'-Diisocyanatodiphenylmethan werden bei 30 bis 45°C unter $N_2$ mit der Suspension aus ca.
299,0 g N,N'-Bis-(2-methoxycarbonylpropyl-2)-4,4'-diaminodiphenylmethan,
200,0 g $\gamma$-Butyrolacton,
300,0 g Toluol (der N-Gehalt des in $\gamma$-Butyrolacton/Toluol gelösten Bisglycinesters beträgt 2,6%)
8,3 g Isophthalsäure und
57,6 g Trimellithsäureanhydrid eingetragen, mit weiteren
100,0 g Toluol versetzt und ca. 12 Stunden bei Raumtemperatur gerührt. Anschließend werden bei 50°C
0,5 g Triäthylendiamin,
345,8 g Trimellithsäureanhydrid und
200,0 g Acetophenon eingerührt und unter Austragung des Toluols auf ca. 200°C erhitzt. Nach ca. 6 Stunden bei 200°C werden bei ca. 180°C
175,0 g Terephthalsäuredimethylester, bei ca. 150°C
180,6 g Tris-(2-hydroxyäthyl)-isocyanurat,
387,0 g einer Mischung aus
178,0 g Trisphenoxytriazin und
350,0 g Äthylenglykol, der zuvor bei ca. 150—170°C unter ca. 266 mbar in ca. 2 Stunden ca. 140,0 g Phenol entzogen worden sind, und
0,5 g Butyltitanat zugesetzt.

Nach weiteren 6 Stunden bei 200 bis 220°C erhält man 1700,0 g eines braunroten, spröden Harzes, mit einem Festgehalt von 92,5% (gemessen nach DIN in 3 Stunden bei 200°C) und einer Viskosität von 29,000 mPas, gemessen in 50%iger γ-Butyrolactonlösung von 20°C.

Das auf einer Glasplatte ausgeschmolzene Harz liefert nach einstündigem Erhitzen auf 230°C eine elastische, nicht vernetzende Folie mit hoher Temperaturbeständigkeit (Erweichungstemperatur oberhalb 350°C) und den für die Hydatoine, Imide, Esteramide und Isocyanurate typischen IR-Absorptionen.

Beispiel 8

a) Unter den in Beispiel 8 angeführten Bedingungen werden bei sonst unveränderten Mengen der Reaktionskomponenten insgesamt

310,7 g Terephthalsäuredimethylester und, anstelle des Tris-(2-hydroxyäthyl)-isocyanurates, insgesamt
336,0 g einer Mischung aus
356,0 g Trisphenoxytriazin und
350,0 g Äthylenglykol, der zuvor bei ca. 150—170°C unter ca. 266 mbar in ca. 2 Stunden ca. 370,0 g Phenol entzogen wurden, umgesetzt.

Man erhält ca. 1875,0 g eines braunroten Festharzes, mit einem Feststoffgehalt von 89,6% und einer Viskosität von 45 800 mPas, gemessen in 50%iger Butyrolactonlösung.

b) Analog den in Beispiel 9 a aufgeführten Bedingungen werden bei sonst unveränderten Mengen der Reaktions-komponenten anstelle des Terephthalsäuredimethylesters

406,4 g Terephthalsäurebisglykolester eingesetzt, und unter der in Beispiel 8 angeführten Reaktionsführung 1804,0 g eines spröden, braunroten Harzes erhalten.

Der Feststoffanteil im Harz beträgt 91,5%, die Viskosität einer 50 Gew.-%igen Lösung in γ-Butyrolacton liegt bei 20°C bei 52 400 mPas.

Beispiel 9

Die Suspension aus ca.

299,0 g N,N'-Bis-(2-methoxycarbonylpropyl-2)-4,4'-diaminodiphenylmethan in
200,0 g γ-Butyrolacton,
300,0 g Toluol (insgesamt ein N-Gehalt von 2,6%)
8,3 g Isophthalsäure und
57,6 g Trimellithsäureanhydrid wird unter $N_2$ bei Temperaturen bis zu 45°C mit insgesamt
525,4 g 4,4'-Diisocyanatodiphenylmethan vermischt und nach Zugabe von
100,0 g Toluol ca. 12 Stunden bei Raumtemperatur gerührt.
Dann werden bei ca. 50°C
345,8 g Trimellithsäureanhydrid eingerührt, mit
0,5 g Triäthylendiamin und
200,0 g Terephthalsäuredimethylester versetzt und ca. 6 Stunden bei bis zu 200°C gehalten.
Bei ca. 180—170°C gibt man dann
518,5 g Terephthalsäuredimethylester, bei ca. 150°C
522,5 g Tris-(2-hydroxyäthyl)-isocyanurat,
1,0 g Bleiacetat und
1,0 g Butyltitanat hinzu, heizt langsam unter Austragung der Kondensationsprodukte auf ca. 200—220°C. Nach ca. 6 Stunden bei 200—220°C werden bei ca. 180°C
92,0 g Glycerin und
186,0 g Äthylenglykol zugesetzt und das Gemisch nochmals ca. 2 Stunden auf 220°C erhitzt.
Es resultieren 2530,0 g eines spröden, rotbraunen Harzes mit einem Feststoffgehalt von 85% und einer Viskosität von 3700 mPas, gemessen in einer 50%igen γ-Butyrolactonlösung von 20°C.

Eine auf einem Blechstreifen in 0,5 Stunden bei ca. 250°C eingebrannte Harzprobe zeigt im IR-Spektrum die für Hydantoine, Ester, Amide, Imide usw. typischen Absorptionen.

Beispiel 10

750,0 g der Lösung des N,N'-Bis-(2-methoxycarbonylpropyl-2)-4,4'-diaminodiphenylmethan (40%) in einem Gemisch aus γ-Butyrolacton (20%) und Toluol (40%) werden bei 30—60°C mit
8,3 g Isophthalsäure und
57,6 g Trimellithsäureanhydrid, dann ab 30—80°C mit
350,3 g 4,4'-Diisocyanatodiphenylmethan versetzt. Nach 2 Stunden bei 60°C werden
150,2 g 4,4'-Diaminodiphenylmethan zugegeben.
Man heizt nach Zugabe von
1,0 g Triäthylendiamin
200,0 g Terephthalsäuredimethylester und
345,8 g Trimellithsäureanhydrid auf 200°C, gibt nach mindestens 4 höchstens 6 Stunden bei 200°C, dann bei 180—150°C

285,0 g Terephthalsäuredimethylester,
653,0 g Tris-(2-hydroxyäthyl)-isocyanurat, katalytische Mengen Bleiacetat und Butyltitanat sowie
380,0 g eines Hydroxypolyesters aus 1,6 Mol Dimethylterephthalat, 0,8 Mol Glycerin und 1,2 Mol Glykol, mit einem Hydroxylgruppengehalt von ca. 6,0 Gew.-% hinzu.

Nach einer erneuten Kondensation von 4 bis höchstens 6 Stunden bei 200—220°C werden 2570,0 g eines bei Raumtemperatur spröden, klaren, rotbraunen Harzes erhalten, dessen Festgehalt bei ca. 90 Gew.-% und dessen Visksoität ca. 22 000 mPas, gemessen in einer 50%igen $\gamma$-Butyrolactonlösung von 20°C, liegt.

Eine in Methanol ausgekochte Harzprobe besitzt im IR-Spektrum die für Hydantoine, Imide, Ester, Amide typischen Absorptionen.

Beispiel 11

Mit den bereits in Beispiel 11 genannten Rohstoffeinsätzen und den dort genannten Reaktionsbedingungen werden der 180 bis 150°C Phase zusätzlich noch
186,0 g Äthylenglykol zugesetzt. Nach eine Kondensation von mindestens 6 bis 8 Stunden bei 200—220°C erhält man unter Destillation der Spaltprodukte wie Methanol, Wasser, $CO_2$ sowie eines Teils der Zusatzstoffe insgesamt 2568 g eines bei Raumtemperatur klaren, spröden, braunroten Harzes mit einem nach DIN gemessenen Feststoffanteil von 91 Gew.-% und einer Viskosität von 55 000 mPas, gemessen in einer 50 Gew.-%igen $\gamma$-Butyrolactonlösung von 20°C. Das IR-Spektrum einer gemäß Beispiel 11 aufgearbeiteten Probe ist dem des dort isolierten Materials identisch.

Beispiel 12

Die Suspension aus
299,0 g N,N'-Bis-(2-methoxycarbonylpropyl-2)-4,4'-diaminodiphenylmethan,
150,0 g $\gamma$-Butyrolacton,
300,0 g Toluol,
8,3 g Isophthalsäure und
57,6 g Trimellithsäureanhydrid wird ab 25°C bis maximal 45°C unter $N_2$ portionsweise mit insgesamt
350,3 g 4,4'-Diisocyanatodiphenylmethan versetzt, dann ca. 4 Stunden bei 40—45°C nachgerührt und schließlich bei 60°C mit
345,8 g Trimellithsäureanhydrid vermischt.

Nach nochmals 1 Stunde bei 60°C werden bei 60—70°C
1,0 g Triäthylendiamin,
120,0 g 4,4'-Diaminodiphenylmethan,
250,0 g Terephthalsäuredimethylester und
50,0 g $\gamma$-Butyrolacton zugemischt.

Man heizt auf 200°C und kondensiert dann ca. 4 bis 6 Stunden bei 200—230°C. Anschließend werden bei ca. 180°C
518,2 g Terephthalsäuredimethylester, bei 150—140°C
653,0 g Tris-(2-hydroxyäthyl)-isocyanurat, katalytische Mengen Bleiacetat und Butyltitanat,
46,0 g Glycerin und
186,0 g Äthylenglykol zugegeben und in 6 bis 8 Stunden bei 200—230°C unter Abdestillieren der Kondensationsprodukte und Zusatzstoffe kondensiert.

Es resultieren 2694,0 g eines spröden, klaren, braunroten Harzes mit einem Feststoffanteil von 90,3 Gew.-%, einer Viskosität von 22 000 mPas, gemessen in 50 Gew.-%iger $\gamma$-Butyrolactonlösung von 20°C.

Das auf polierten Metallplatten eingebrannte Polymerisat zeigt in dem durch Reflexionsmessung aufgenommenen IR-Spektrum die für Hydantoin-, Ester-, Amid-, Imid- und Isocyanuratgruppen typischen Banden.

Beispiel 13

350,3 g 4,4'-Diisocyanatodiphenylmethan werden ab 25 bis 60°C unter $N_2$ in die Suspension aus
299 g N,N'-Bis-(2-methoxycarbonylpropyl-2-)-4,4'-diaminodiphenylmethan,
150 g $\gamma$-Butyrolacton,
300 g Toluol,
8,3 g Isophthalsäure und
57,6 g Trimellithsäureanhydrid eingetragen.

Nach 1-stündigem Rühren bei 60°C setzt man
345,8 g Trimellithsäureanhydrid zu, trägt
1,0 g Triäthylendiamin ein und rührt ca. 1 Stunde bei 60°C nach. Nach Zugabe von
120 g 4,4'-Diaminodiphenylmethan,
200 g Terephthalsäuredimethylester,
50 g $\gamma$-Butyrolacton wird unter Abdestillieren des Toluols auf 200—230°C erhitzt und dabei ca. 4 bis 6 Stunden kondensiert. Anschließend werden bei 180°C

382 g Terephthalsäuredimethylester und bei 150°C
734,1 g Tris-(2-hydroxyethyl)-isocyanurat,
275 g eines Polyesters aus 1,0 Mol Terephthalsäure, 0,38 Mol Glycerin und 0,72 Mol Glykol mit einem Hydroxylgruppengehalt von ca. 6,0 Gew.-% und katalytische Mengen Bleiacetat und Butyltitanat eingerührt.
Nach einer abschließenden Kondensationszeit von 4—6 Stunden bei 200—220°C werden 2724 g eines klaren, hellrotbraunen, spröden Festharzes mit einem Harzanteil von 90,3% und einer Viskosität von 22 070 mPa.s, gemessen in 50%iger $\gamma$-Butyrolactonlösung, von 20°C, erhalten.

Das in einer Kugelmühle auf eine Korngröße <1 $\mu$m gemahlene Produkt wird in einer elektrostatischen Pulverbeschichtungsanlage auf Erichsen-Bleche aufgebracht und anschließend während je 30 Minuten bei 200°C sowie bei 250°C zu einem homogenen, klaren, hellbraunen Film von hoher Oberflächenhärte, guter Elastizität und Chemikalienfestigkeit sowie einer Erweichungstemperatur von >330°C eingebrannt.

Beispiel 14

299 g N,N'-Bis-(2-methoxycarbonylpropyl-2)-4,4'-diaminodiphenylmethan,
8,3 g Isophthalsäure,
57,6 g Trimellithsäureanhydrid werden bei Raumpteratur mit
150 g $\gamma$-Butyrolacton und
300 g Toluol verrührt, dann unter $N_2$ bei 25°C bis 45°C mit
213 g 4,4'-Diisocyantodiphenylmethan versetzt und 1 Stunde bei 45°C nachgerührt. Anschließend trägt man ab 45—60°C weitere
345,8 g Trimellithsäureanhydrid sowie
288 g 4,4'-Diisocyanatodiphenylmethan, gibt dann noch
200 g Terephthalsäuredimethylester und
1,0 g Triäthylendiamin hinzu und rührt 1 Stunde unter $N_2$ bei 60°C nach.
Schließlich wird unter Austragen des Toluols bzw. der Kondensationsprodukte ca. 4 bis 6 Stunden auf 200 bis 220°C erhitzt. Man versetzt dann ab ca. 180°C mit
518,2 g Terephthalsäuredimethylester, ab ca. 150°C mit
653 g Tris-(2-hydroxyethyl)-isocyanurat,
180 g Äthylenglykol,
46 g Glycerin und katalytischen Mengen Bleiacetat und Butyltitanat und kondensiert nochmals 4 bis 6 Stunden bei 200—220°C.
Man erhält schließlich 2488 g eines spröden, braunroten Festharzes mit einem Harzanteil von 90,6% und einer Viskosität von 8700 mPa.s, gemessen in einer 50%igen Lösung in $\gamma$-Butyrolacton von 20°C.

Das Harz wird in eine 15%ige Methylenchloridlösung überführt, in einer entsprechenden Foliengießmaschine zu einer Folie vergossen und bei einer Temperatur von 250—270°C zu einer Gesamtstärke von höchstens 10 $\mu$m gereckt. Die klare, nahezu farblose Folie von hoher Reißfestigkeit und guten Tiefzieheigenschaften besitzt eine Wiedererweichungstemperatur von >350°C, eine Wärmestandsfestigkeit von mindestens 300°C sowie eine gute Chemikalienfestigkeit, Elastizität und hervorragende elektrische isolationswerte.

Beispiel 15

Eine Vorlage aus
299 g N,N'-Bis-(2-methoxycarbonylpropyl-2)-4,4'-diaminophenylmethan in
150 g $\gamma$-Butyrolacton,
300 g Toluol,
8,3 g isophthalsäure und
57,6 g Trimellithsäureanhydrid wird ab 25°C bis zu 100°C unter $N_2$ mit insgesamt
500,5 g 4,4'-Diisocyanatodiphenylmethan und bei ca. 80°C mit
1,0 g Triäthylendiamin,
200 g Terephthalsäuredimethylester und
345,8 g Trimellithsäureanhydrid versetzt.
Anschließend rührt man 1 Stunde bei 100°C und 1 Stunde bei 125°C, heizt dann unter Austragen des Toluols sowie des Kondensates innerhalb von 2 Stunden auf 200°C und kondensiert ca. 4 Stunden bei 200—220°C. Man kühlt dann auf ca. 180°C ab und rührt nacheinander
285 g Terephthalsäuredimethylester,
734 g Tris-(2-hydroxyethyl)-isocyanurat,
380 g eines Terephthalsäurepolyesters aus 1,0 Mol Terephthalsäure, 0,38 Mol Glycerin und 0,72 Mol Glykol mit ca. 6,0 Gew.-% Hydroxylgruppen sowie katalytische Mengen Bleiacetat und Butyltitanat homogen in das Reaktionsgemisch ein.
Anschließend werden nach einer Kondensation von 1 Stunde bei 170°C, 2 Stunden bei 200°C und 2 Stunden bei 220°C, bei ca. 180°C

100 g Äthylenglykol zugegeben und weitere 2 Stunden bei 220°C erhitzt.

Es resultieren 2460 g eines spröden, braunroten Harzes, mit einem Festgehalt von 91,3 Gew.-% und einer Viskosität von 10 300 mPa.s, gemessen in einer 50%igen $\gamma$-Butyrolactonlösung von 20°C, bzw. von 8700 mPa.s, gemessen in einer 50%igen Diäthylenglykolmonoäthylätherlösung von 20°C.

Das Festharz kann in einer Strangenpreßmaschine zu klaren, braunroten Formkörpern mit Erweichungstemperaturen >350°C bzw. Formstandfestigkeiten >300°C verarbeitet werden.

Beispiel 16

582,5 g Terephthalsäuredimethylester,
92,1 g Glycerin,
86,5 g Trimellithsäureanhydrid,
2,0 g Bleiacetat und
60 g Xylol werden unter $N_2$ vermischt und bei 200—210°C bis zum Abschluß der Methanoldestillation kondensiert.
Man verdünnt die Schmelze mit
50 g $\gamma$-Butyrolacton,
100 g Benzoesäureäthylester und
150 g Toluol, versetzt bei 30°C mit
298,9 g N,N'-Bis-(2-methoxycarbonylpropyl-2)-4,4'-diaminodiphenylmethan und dann ab 30—45°C mit der Lösung von
500,4 g 4,4'-Diisocyanatodiphenylmethan in
200 g Toluol. Das ca. 7 Stunden bei Raumtemperatur gerührte Gemisch wird dann mit
307,4 g Trimellithsäureanhydrid,
116,3 g Terephthalsäure sowie
1,1 g Endoethylenpiperazin versetzt, innerhalb 1 Stunde auf 200°C erhitzt und 5 Stunden bei 210—220°C kondensiert. Nach der $CO_2$-Entwicklung und Kondensatbildung versetzt man ab 170°C mit
391,9 g Tris-(2-hydroxyethyl)-isocyanurat,
2,0 g Bleiacetat,
1,0 g Butyltitanat,
70 g Xylol, kondensiert ca. 6 Stunden bei 200—220°C bis zum Ende der Destillation, versetzt ab 190°C mit
186,0 g Glykol,
46,0 g Glycerin und kondensiert ca. 3 Stunden bei 210—220°C bzw. bis kein Destillat mehr unter 150°C anfällt. Abschließend kondensiert man nochmals bei 210—230°C zunächst direkt, schließlich unter bis zu maximal 266 mbar.

Das resultierende, braunrote, klare, spröde Harz ist 91,7 gew.-%ig, besitzt bei 150°C eine Schmelzviskosität von 1950 mPas sowie eine Lösungsviskosität in einer 50 Gew.-%igen Benzylalkohol-Lösung von mindestens 17 000 mPas bei 20°C.

Das im ausgehärteten Zustand die für Hydantoine, Urethane, Amide, Imide, Ester und Isocyanurate typische IR-Banden aufweisende Harz kann direkt zu Formkörpern höherer Oberflächenhärte, guter Chemikalienbeständigkeit, ausgezeichneter Wärmebeständigkeit (>380°C) und hervorragenden elektrischen Eigenschaften verarbeitet werden.

Beispiel 17

732,1 g Terephthalsäuredimethylester
57,6 g Trimellithsäureanhydrid,
8,3 g Isophthalsäure,
211,6 g Tris-(2-hydroxyethyl)-isocyanurat,
1,5 g Bleiacetat und
70 g Xylol werden unter $N_2$ vermischt und bei 200—210°C bis zum Ende der Destillatbildung kondensiert.
Man verdünnt mit
150 g Acetophenon und
100 g Toluol, versetzt ab 30°C mit
298,9 g N,N'-Bis-(2-methoxycarbonylpropyl-2)-4,4'-diaminodiphenylmethan, dann ab 35—40°C mit der Mischung von
121,9 g Tolylendiisocyanat (Isomerengemisch aus 2,4:2,6 wie 80:20) und
147,1 g 1,5-Diisocyanatonaphthalin in
150 g Toluol sowie
0,7 g Endoethylenpiperazin und rührt ca. 9 Stunden bei 30—35°C. Dann werden bei 50°C
96,1 g Trimellithsäureanhydrid sowie
0,6 g Endoäthylenpiperazin zugegeben und innerhalb von 2 Stunden über 100°C, 120°C auf 170°C erhitzt. Man temperiert dann 1 Stunde bei 190°C, 3 Stunden bei 205—210°C und

2 Stunden bei 210—215°C bis zum Abschluß der $CO_2$-Entwicklung und Destillatbildung. Anschließend versetzt man ab 170°C mit

83,1 g Terephthalsäure,
326,6 g Trimellithsäureanhydrid sowie portionsweise mit insgesamt
168,5 g 4,4'-Diaminodiphenylmethan, dann mit
522,5 g Tris-(2-hydroxyethyl)-isocyanurat,
124,0 g Glykol,
50,0 g Glycerin,
1,5 g Bleiacetat,
1,0 g Butyltitanat und
70 g Xylol, heizt über 170°C auf 200°C und kondensiert ca. 7 Stunden zunächst bei 200—220°C, dann bei 220—230°C bis zum Ende der Destillatbildung.

Das resultierende rotbraune, spröde Schmelzharz besitzt einen Festgehalt von ca. 91,3 Gew.-% und eine Viskosität in 50 Gew.-%iger Benzylalkohol-Lösung von mindestens 21 000 mPas bei 20°C.

Die mit Propylencarbonat auf ca. 20 Gew.-% eingestellte Harzlösung wird auf einer Foliengießmaschine zur Folie vergossen, in ca. 30 Minuten bei 270—280°C ausgehärtet und mit entsprechenden Kupferfolien zu flexiblen gedruckten Schaltungen verarbeitet. Die erforderlichen elektrischen Kontaktstellen können direkt auf der hochwärmebeständigen und schrumpffesten Folie verlötet werden.

Im IR-Spektrum der Folie sind die für Hydantoine, Amide, Ester, Imide und Isocyanurate typischen Banden vorhanden.

### Beispiel 18

325,3 g 4,4'-Diisocyanatodiphenylmethan und
298,9 g N,N'-Bis-(2-methoxycarbonylpropyl-2)-4,4'-diaminophenylmethan werden bei Raumtemperatur unter $N_2$ mit
400 g Acetophenon und
200 g Toluol vermischt, dann ab 35—40°C mit
41,5 g Isophthalsäure und
0,5 g Endoethylenpiperazin versetzt und 12 Stunden bei 35—40°C nachgerührt. Anschließend versetzt man bei 30—40°C mit
147,1 g 1,5-Diisocyanatonaphthalin
0,7 g Endoethylenpiperazin, rührt 1 Stunde bei 50°C verrührt dabei mit
384,2 g Trimellithsäureanhydrid sowie
194 g Terephthalsäuredimethylester, erhitzt in ca. 3 Stunden über 100°C, 120°C, 170°C auf 190°C und kondensiert 3 Stunden bei 205—210°C bis zum Ende der $CO_2$— und Destillatentwicklung, versetzt dann bei 170°C mit
972,5 g eines Kondensates aus 1 Mol Tris-(2-hydroxyethyl)-isocyanurat und 3 Mol Terephthalsäuredimethylester,
33,2 g Terephthalsäure,
391,9 g Tris-(2-hydroxyethyl)-isocyanurat,
156,6 g Glycerin,
3,0 g Bleiacetat,
1,5 g Butyltitanat und
70 g Xylol, erhitzt über 170°C auf 200°C und kondensiert ca. 6 Stunden bei 200—220°C, schließlich bei 220—230°C bis zum Ende der $CO_2$— und Kondensatentwicklung sowie bis zu einer Schmelzviskosität von ca. 2000 mPas bei 160°C und einem DIN-Festgehalt von mindestens 91 Gew.-%.

Die 50 Gew.-%ige Lösung des Schmelzharzes in Benzylalkohol besitzt eine Viskosität von mindestens 27 500 mPas bei 20°C.

Das Ir-Spektrum der Lösung zeigt die für Hydantoin-, Amid-, Imid-, Ester- und Isocyanuratstrukturen typischen Absorptionsbanden.

Ein mit dieser Lacklösung getränktes Glasseidengewebe wird in 10 Minuten bei 200°C getrocknet und erhält in 15 Minuten bei 300°C eine hochwärmefeste, lösungsmittelfeste und abriebfeste Beschichtung mit hervorragenden elektrischen Isolationseigenschaften.

### Beispiel 19

210,2 g 1,5-Diisocyanatonaphthalin,
8,3 g Isophthalsäure und
38,4 g Trimellithsäureanhydrid werden bei Raumtemperatur unter $N_2$ mit
800 g Acetophenon und
200 g Toluol vermischt und dann ab 30—45°C mit
296,9 g N,N'-Bis-(2-methoxycarbonylpropyl-2)-4,4'-diaminodiphenyläther versetzt. Man rührt 3 Stunden bei 30—35°C nach, versetzt mit
0,7 g Endoethylenpiperazin, heizt innerhalb von 1 Stunde über 150/60°C auf 200°C, kondensiert insgesamt 6 Stunden bei 200—205°C und verdünnt dabei abschließend mit insgesamt

340 g Benzoesäureäthylester auf eine ca. 30 Gew.-%ige Lösung mit einer Viskosität von ca. 87 300 mPas bei 20°C.

Die mit Benzylalkohol/Toluol (1:1) auf ca. 7 Gew.-% verdünnte Harzlösung wird mit Hilfe einer Airless-Spritzvorrichtung in eine Methanolphase verwirbelt und dabei pulverfein gefällt.

Das resultierende Pulver kann analog dem im Beispiel 18 geschilderten Verfahren, beispielsweise aus einer Methylenchlorid-Lösung zu Folien vergossen und diesmal sogar ohne Temperung nach Kaschierung mit Kupferfolien zu flexiblen gedruckten Schaltungen mit einem hochwärmebeständigen, flexiblen, lösungsmittelfesten und hervorragend elektrisch isolierenden Trägermaterial verarbeitet werden.

Im IR-Spektrum des Folienmaterials sind die für Hydantoin-, Amid- und Imid-Strukturen typischen Absorptionsbanden enthalten.

Schließlich kann die auf Glasflächen vergossene Harzlösung nach oberflächlicher Antrocknung unter Wasser abgeschreckt zu permeablen Folien steuerbarer Porosität verarbeitet werden. Diese zur Wasserentsalzung nach dem Verfahren der "umgekehrten Osmose" geeigneten Membranen ermöglichen eine bis zu 99,9 Gew.-%ige Wasserentsalzung.

**Patentansprüche**

1. Verfahren zur Herstellung von (Thio)Hydantoingruppen aufweisenden Verbindungen durch Umsetzung von gegebenenfalls polyfunktionellen $\alpha$-Aminocarbonsäurederivaten und organischen, gegebenenfalls maskierten Iso(thio)cyanaten, und/oder Isocyanuratopolyisocyanaten in Gegenwart von Carboxylgruppenhaltigen Verbindungen, die neben der Carboxylgruppe noch wenigstens eine weitere funktionelle Gruppe enthalten, dadurch gekennzeichnet, daß die Umsetzung in $\gamma$-Butyrolacton, Acetophenon, Benzoesäuremethyl- oder -ethylester, Benzylalkohol oder deren Gemische als Lösungsmittel(n) erfolgt.

2. Verfahren nach Anspruch 1, dadurch gekennzeichnet, daß die Carboxylgruppen-haltigen Verbindungen Verbindungen der allgemeinen Formel II

$$(X)_z\text{—}R^1\text{—}COOH \qquad (II)$$

sind,

in der $R^1$ für einen z + 1-wertigen, gegebenenfalls substituierten aliphatischen, cycloaliphatischen, aliphatisch-aromatischen, heterocyclischen oder aromatischen Rest, z für eine ganze Zahl von 1—4 und X für eine Carboxyl-, Glycinsäurederivat-, Hydroxy-, Amino-, Carboxylester- oder cycl. Anhydridgruppe steht.

3. Verfahren nach Anspruch 2, dadurch gekennzeichnet, daß in der allgemeinen Formel II

$R^1$ einen z + 1-wertigen, gegebenenfalls substituierten aliphatischen Rest mit $C_1$—$C_{20}$, cycloaliphatischen Rest mit $C_5$—$C_{12}$, aliphatisch-aromatischen Rest mit $C_6$—$C_{20}$, oder aromatischen Rest mit $C_5$—$C_{12}$ oder einen Heteroatome wie N, O oder S im Ring enthaltenden Aryl- oder Cycloalkylrest mit 5—12 C—Atomen und

z 1 oder 2 bedeuten.

4. Verfahren nach Ansprüchen 1—3, dadurch gekennzeichnet, daß die Carboxylgruppen auch erst während der Reaktion partiell oder vollständig aus cyclischen Anhydridverbindungen entstehen können.

5. Verfahren nach Ansprüchen 1—3, dadurch gekennzeichnet, daß als carboxylgruppenhaltige Verbindungen Verbindungen der allgemeinen Formel

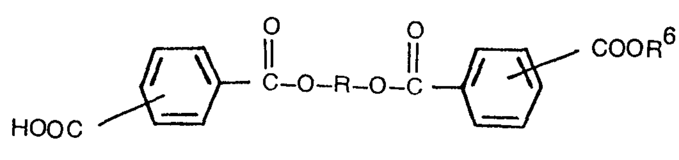

sind, in der

R einen mindestens zweiwertigen aromatischen Rest mit $C_5$—$C_{12}$, einen gesättigten oder ungesättigten aliphatischen mit $C_2$—$C_{20}$, cycloaliphatischen mit $C_5$—$C_{12}$ Rest, in dem aromatische, cycloaliphatische oder heterocyclische Ringsysteme sowie Ether-, Keto-, Ester- oder Sulfonbrücken enthalten sein können, und der gegebenenfalls durch Halogene, Nitro- oder Alkoxygruppen mit $C_1$—$C_{20}$ substituiert sein kann, und

$R^6$ Wasserstoff oder einen gegebenenfalls substituierten aliphatischen mit $C_1$—$C_{20}$, aliphatisch-aromatischen mit $C_6$—$C_{20}$ oder aromatischen Rest mit $C_5$—$C_{12}$ bedeuten.

6. Verfahren nach Ansprüchen 1—3, dadurch gekennzeichnet, daß die carboxylgruppenhaltigen Verbindungen Verbindungen der allgemeinen Formel

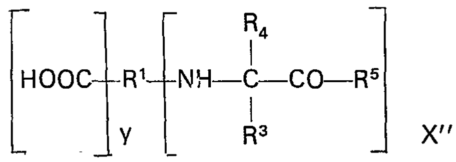

sind, in der

$R^3$ und $R^4$, gleich oder verschieden, für Wasserstoff, einen Alkylrest mit $C_1$—$C_{20}$, einen Arylrest mit $C_5$—$C_{12}$ oder einen Aralkylrest mit $C_6$—$C_{20}$, $R^5$ eine Hydroxylgruppe, eine Aminogruppe, eine $C_1$—$C_{20}$ Alkylamino-$C_1$—$C_{20}$ Dialkylamino-, $C_1$—$C_{20}$ Alkoxy- oder $C_5$—$C_{12}$ Aroxygruppe und

x'' und y, gleich oder verschieden, für eine ganze Zahl von 1—3 stehen.

7. Verfahren nach Ansprüchen 1—6, dadurch gekennzeichnet, daß als carboxylgruppenhaltigen Verbindungen Isophthalsäure und/oder Trimellithsäure und/oder Trimellithsäureanhydrid und/oder Terephthalsäure, sowie den Isomeren, Carboxylgruppen enthaltenden Anilinoisobuttersäurederivate, den entsprechenden Oligoestern dieser Säuren mit untergeordneten Mengen Ethylenglykol, Propylenglykol, Glycerin, Trimethylolpropan und/oder Trishydroxyethylisocyanurat eingesetzt werden.

**Claims**

1. Process for the preparation of compounds containing (thio)hydantoin groups by reacting optionally polyfunctional $\alpha$-amino-carboxylic acid derivatives and organic, optionally masked iso(thio)cyanates and/or isocyanurate polyisocyanates in the presence of carboxyl-group-containing compounds which contain, in addition to the carboxyl group, at least one further functional group, characterised in that the reaction is carried out in $\gamma$-butyrolactone, acetophenone, benzoic acid methyl or ethyl ester, benzyl alcohol or mixtures thereof as the solvent(s).

2. Process according to Claim 1, characterised in that the carboxyl-group-containing compounds are compounds of the general formula II

$$(X)_z—R^1—COOH \qquad (II)$$

in which

$R^1$ represents a z + 1-valent, optionally substituted aliphatic, cycloaliphatic, aliphatic-aromatic, heterocyclic or aromatic radical,

z represents an integer of 1—4 and

X represents a carboxyl, glycine acid derivative, hydroxyl, amino, carboxyl ester or cyclic anhydride group.

3. Process according to Claim 2, characterised in that in the general formula II

$R^1$ denotes a z + 1-valent, optionally substituted aliphatic radical with 1—20 C atoms, a cycloaliphatic radical with 5—12 C atoms, an aliphatic-aromatic radical with 6—20 C atoms or an aromatic radical with 5—12 C atoms or an aryl or cycloalkyl radical with 5—12 C atoms containing hetero atoms such as N, O or S in the ring, and

z denotes 1 or 2.

4. Process according to Claims 1—3, characterised in that the carboxyl groups may also partly or completely form from cyclic anhydride compounds only in the course of the reaction.

5. Process according to Claims 1—3, characterised in that the carboxyl-group-containing compounds used are compounds of the general formula

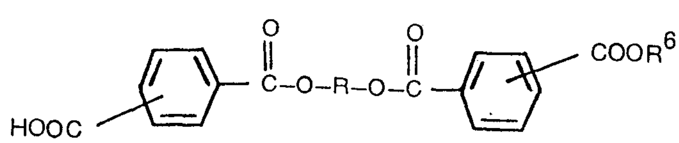

in which

R represents an at least divalent aromatic radical with 5—12 C atoms, a saturated or unsaturated aliphatic radical with 2—20 C atoms, a cycloaliphatic radical with 5—12 C atoms which may contain aromatic, cycloaliphatic or heterocyclic ring systems as well as ether, keto, ester or sulphone bridges and which may be substituted by halogen atoms, nitro groups or alkoxy groups with 1—20 C atoms, and

$R^6$ represents hydrogen or an optionally substituted aliphatic radical with 1—20 C atoms, an aliphatic-aromatic radical with 6—20 C atoms or an aromatic radical with 5—12 C atoms.

6. Process according to Claims 1—3, characterised in that the carboxyl-group-containing compounds are compounds of the general formula

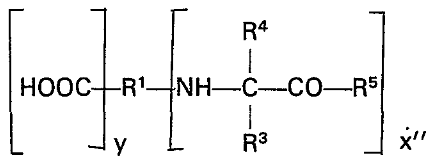

in which

$R^3$ and $R^4$ are identical or different and represent hydrogen, an alkyl radical with 1—20 C atoms, an aryl radical with 5—12 C atoms or an aralkyl radical with 6—20 C atoms,

$R^5$ represents a hydroxyl group, an amino group, a $C_1$—$C_{20}$ alkylamino, $C_1$—$C_{20}$ dialkylamino, $C_1$—$C_{20}$ alkoxy or $C_5$—$C_{12}$ aroxy group and

x'' and y are identical or different and represent an integer of 1—3.

7. Process according to Claims 1—6, characterised in that the carboxyl-group-containing compounds used are isophthalic acid and/or trimellitic acid and/or trimellitic acid anhydride and/or terephthalic acid, and their isomers, anilinoisobutyric acid derivatives containing carboxyl groups and the corresponding oligo esters of these acids with minor quantities of ethylene glycol, propylene glycol, glycerol, trimethylolpropane and/or tris-hydroxyethyl-isocyanurate.

**Revendications**

1. Procédé de préparation de composés portant des groupes (thio)hydantoïne par réaction de dérivés d'acides alpha-aminocarboxyliques éventuellement polyfunctionnels et d'iso(thio) cyanates éventuellement masqués et/ou d'isocyanuratopolyisocyanates en présence de composés contenant un groupe carboxyle et qui, en plus du groupe carboxyle, contiennent encore au moins un autre groupe fonctionnel, caractérisé en ce que la réaction est effectuée dans la gamma-butyrolactone, l'acétophénone, le benzoate de méthyle ou d'éthyle, l'alcool benzylique ou leurs mélanges en tant que solvant(s).

2. Procédé selon la revendication 1, caractérisé en ce que les composés contenant un groupe carboxyle sont des composés de formule générale II

$$(X)_z—R^1—COOH \qquad (II)$$

dans laquelle

$R^1$ représente un reste aliphatique, cycloaliphatique, aliphatique-aromatique, hétérocyclique ou aromatique éventuellement substitué de valence z + 1,

z est un nombre entier de 1 à 4 et

X représente un groupe carboxyle, dérivé d'acide glycinique, hydroxy, amino, ester carboxylique ou anhydride cyclique.

3. Procédé selon la revendication 2, caractérisé en ce que, dans la formule générale II

$R^1$ représente un reste aliphatique en $C_1$—$C_{20}$, cycloaliphatique en $C_5$—$C_{12}$, aliphatique-aromatique en $C_6$—$C_{20}$ ou aromatique en $C_5$—$C_{12}$ éventuellement substitué de valence z + 1, ou un groupe aryle ou cycloalkyle en $C_5$—$C_{12}$ contenant de hétéroatomes tels que N, O ou S dans le cycle, et

z est égal à 1 ou 2.

4. Procédé selon les revendications 1 à 3, caractérisé en ce que les groupes carboxyle peuvent également être formés en totalité ou en partie au cours de la réaction à partir d'anhydrides cycliques.

5. Procédé selon les revendications 1 à 3, caractérisé en ce que l'on utilise en tant que composés contenant un groupe carboxyle des composés de formule générale

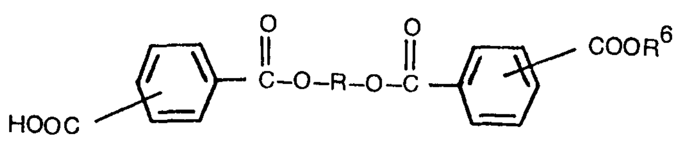

dans laquelle

R représente un reste aromatique au moins divalent en $C_5$—$C_{12}$, un reste aliphatique saturé ou insaturé en $C_2$—$C_{20}$, un reste cycloaliphatique en $C_5$—$C_{12}$, qui peut contenir des sytèmes cycliques aromatiques, cycloaliphatiques ou hétérocycliques ainsi que des ponts éther, céto, ester ou sulfone, et qui peut être éventuellement substitué par des halogènes, des groupes nitro ou alcoxy en $C_1$—$C_{20}$ et

$R^6$ représente l'hydrogène ou un reste aliphatique en $C_1$—$C_{20}$, aliphatique-aromatique en $C_6$—$C_{20}$ ou aromatique en $C_5$—$C_{12}$ eventuellement substitué.

6. Procédé selon les revendications 1 à 3, caractérisé en ce que les composés contenant un groupe carboxyle sont des composés de formule générale

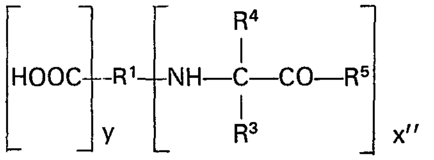

dans laquelle

$R^3$ et $R^4$, identiques ou différents, représentent l'hydrogène, un groupe alkyle en $C_1$—$C_{20}$, aryle en $C_5$—$C_{12}$ ou aralkyle en $C_6$—$C_{20}$,

$R^5$ représente un groupe hydroxy, un groupe amino, un groupe alkylamino en $C_1$—$C_{20}$, dialkylamino en $C_1$—$C_{20}$, alcoxy en $C_1$—$C_{20}$ ou aroxy en $C_5$—$C_{12}$ et

X'' et Y, identiques ou différents, représentent un nombre entier de 1 à 3.

7. Procédé selon les revendications 1 à 6, caractérisé en ce que l'on utilise en tant que composés portant un groupe carboxyle l'acide isophtalique et/ou l'acide trimellitique et/ou l'anhydride trimellitique et/ou l'acide téréphtalique ou encore les dérivés isomères de l'acide anilinoisobutyrique contenant des groupes carboxyle, les oligoesters correspondants de ces acides et de défauts d'éthylène-glycol, de propylène-glycol, de glycérol, de triméthylol-propane et/ou de l'isocyanurate de tris-hydroxyéthyle.